# EUROPÄISCHE PATENTSCHRIFT

(11) **EP 1 275 601 B1**
(45) Veröffentlichungstag und Bekanntmachung des Hinweises auf die Patenterteilung: **28.05.2008**
(21) Anmeldenummer: 02014516.5
(22) Anmeldetag: 01.07.2002
(51) Int. Cl.: B65G 47/31, B23Q 7/14

(54) **Verfahren und Einrichtung für den Transfer von Werkstücken**
Method and device for the transfer of workpieces
Procédé et dispositif permettant de transférer des pièces

(30) Priorität: 09.07.2001 EP 01810677
(43) Veröffentlichungstag der Anmeldung: 15.01.2003
(73) Patentinhaber: Komax Holding AG, 6036 Dierikon (CH)
(72) Erfinder: Frommenwiller, Franz, El. Ing. HTL, 6023 Rothenburg (CH); Fischer, Bruno, Masch. Ing. HTL, 8955 Oetwil (CH); Klingler, Markus, Masch. Tech. TS, 8155 Niederhasli (CH)
(74) Vertreter: Gaussmann, Andreas

(56) Entgegenhaltungen:
- EP-A- 0 340 639
- DE-A- 2 544 499
- DE-A- 19 826 627
- US-A- 3 075 630
- US-A- 3 827 545

## Beschreibung

Die Erfindung betrifft ein Verfahren gemäß dem Oberbegriff des unabhängigen Anspruchs 1 und eine Einrichtung gemäß dem Oberbegriff des unabhängigen Anspruchs 4 für den Transfer von Werkstücken, die in mindestens einer ersten Gruppe von Arbeitsstationen und in mindestens einer zweiten Gruppe von Arbeitsstationen einer Fertigungslinie bearbeitet werden, wobei eine erste Transfereinrichtung Werkstückträger mit den Werkstücken von Arbeitsstation zu Arbeitsstation der ersten Gruppe bewegt und eine zweite Transfereinrichtung Werkstückträger mit den Werkstücken von Arbeitsstation zu Arbeitsstation der zweiten Gruppe bewegt, wobei die erste Transfereinrichtung die Werkstückträger einer Übergabeeinrichtung übergibt und die Übergabeeinrichtung die Werkstückträger der zweiten Transfereinrichtung zuführt.

Aus der Offenlegungsschrift DE 198 26 627 A1 ist ein Verfahren für den Transfer von Werkstücken und eine Transfereinrichtung bekannt geworden, bei der Werkstücke mittels Werkstückträgern von Arbeitsstation zu Arbeitsstation einer Fertigungslinie transportiert werden. Die Arbeitsstationen sind in einer Linie angeordnet und mit Montagevorrichtungen und/oder Bearbeitungsvorrichtungen versehen. Eine erste Gruppe von Arbeitsstationen führt zeitintensive Arbeitsabläufe aus und eine zweite Gruppe von Arbeitsstationen führt weniger zeitintensive Arbeitsabläufe aus, wobei die erste Gruppe in Fertigungsrichtung gesehen der zweiten Gruppe vorgeschaltet ist. Eine erste Transfereinrichtung bewegt die Werkstückträger von Arbeitsstation zu Arbeitsstation der ersten Gruppe. Eine zweite Transfereinrichtung bewegt die Werkstückträger von Arbeitsstation zu Arbeitsstation der zweiten Gruppe. Eine Übergabeeinrichtung ist zwischen die beiden Transfereinrichtungen geschaltet, wobei die erste Transfereinrichtung die Werkstückträger der Übergabeeinrichtung übergibt und die Übergabeeinrichtung die Werkstückträger der zweiten Transfereinrichtung zuführt. Die Werkstückträger gelangen von der ersten Transfereinrichtung auf ein Transportband der Übergabeeinrichtung, wobei das Transportband die Werkstückträger vorpositioniert indem die Werkstückträger bis zu einem Stauelement bewegt werden. Einlaufseitig weist die zweite Transfereinrichtung einen Kupplungsabschnitt auf, der mittels einer Hubbewegung einen Werkstückträger am bodenseitigen Zahnprofil erfasst und an einen Riementrieb weiterleitet. Die Hubbewegung des Kupplungsabschnittes ist von einer Steuerwelle für die Arbeitsstationen der zweiten Gruppe abgeleitet.

Ein Nachteil der bekannten Einrichtung liegt darin, dass die Fortbewegung der Werkstückträger innerhalb der Übergabeeinrichtung mittels einer Reibkraft zwischen Werkstückträger und Flachriemen erfolgt. Falls die Reibkraft die erforderliche Zugkraft des Werkstückträgers unterschreitet, bleibt der Werkstückträger unkontrolliert stehen. Eine grössere Masse des Werkstückträgers könnte die Zugkraft erhöhen. Schwerere Werkstückträger verursachen jedoch grösseren Verschleiss und bedingen kleinere Transportgeschwindigkeiten.

Hier will die Erfindung Abhilfe schaffen. Die Erfindung, wie sie in den Ansprüchen 1 und 4 gekennzeichnet ist, löst die Aufgabe, die Nachteile der bekannten Einrichtung zu vermeiden und die Werkstückträger unabhängig von der Reibkraft zwischen dem Werkstückträger und dem Transportband fortzubewegen.

Vorteilhafte Weiterbildungen der Erfindung sind in den abhängigen Patentansprüchen angegeben.

Die durch die Erfindung erreichten Vorteile sind im wesentlichen darin zu sehen, dass die Werkstückträger innerhalb der gesamten Fertigungslinie formschlüssig transportiert werden. Dadurch kann die Fertigungslinie längenoptimiert werden, die Bearbeitungsanlage baut somit kürzer und braucht weniger Platz. Die Übergabeeinrichtung kann mit kleinstmöglichem Raster arbeiten, bzw. Werkstückträger an Werkstückträger transportieren und anschliessend einer Transfereinheit mit unterschiedlichem Raster übergeben. Ausserdem kann die Einrichtung für den Transfer der Werkstückträger mechanisch wesentlich einfacher gebaut werden, was sich wiederum günstig auf die Herstellungskosten der Bearbeitungsanlage auswirkt. Zudem kommt die Einrichtung mit weniger Verschleissteilen aus, was die Zuverlässigkeit erhöht und den Aufwand an Unterhalt verkleinert.

Anhand der beiliegenden Figuren wird die vorliegende Erfindung näher erläutert.

Es zeigen:
Fig. 1
   eine Fertigungslinie mit Arbeitsstationen und einer Einrichtung für den Transfer von Werkstückträgern,
Fig. 2
   eine erste Transfereinrichtung, eine Übergabeeinrichtung und eine zweite Transfereinrichtung mit den zugehörigen Antriebsmotoren und Sensoren zur Erfassung der Lage der Werkstückträger,
Fig. 3
   eine schematische Darstellung eines Werkstückträgers beim Übergang von einer Transfereinrichtung auf eine Übergabeeinrichtung, bzw. beim Übergang von einer Übergabeeinrichtung auf eine Transfereinrichtung,
Fig. 4, Fig. 5, Fig. 6
   eine schematische Darstellung der Synchronisation der Antriebsmotoren beim Übergang eines Werkstückträgers von einer Transfereinrichtung auf eine Übergabeeinrichtung, bzw. beim Übergang eines Werkstückträgers von einer Übergabeeinrichtung auf eine Transfereinrichtung,
Fig. 7
   eine schematische Darstellung des Transfers der Werkstückträger mit gleichem Abstand innerhalb der Fertigungslinie,
Fig. 8
   eine schematische Darstellung des Transfers der Werkstückträger mit unterschiedlichem Abstand innerhalb der Fertigungslinie und
Fig. 9
   eine schematische Darstellung des Transfers der Werkstückträger mit unterschiedlichem Abstand und unterschiedlich zeitintensiven Arbeitsabläufen innerhalb der Fertigungslinie.

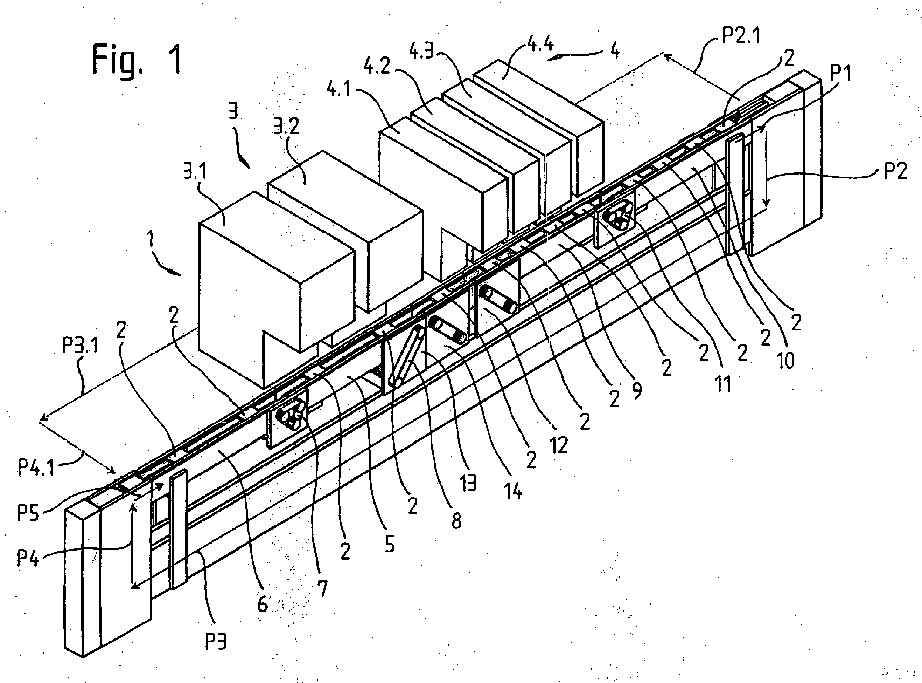

Fig. 1 zeigt eine Fertigungslinie 1 zur Bearbeitung von Werkstücken, beispielsweise Kleinteilen oder Leiterenden, welche mittels Werkstückträgern 2 von Arbeitsstation zu Arbeitsstation transportiert werden. Die Fertigungsrichtung ist mit einem Pfeil P0 symbolisiert. Die Arbeitsstationen sind in einer Linie angeordnet und mit Montagevorrichtungen und/oder Bearbeitungsvorrichtungen versehen, wobei eine erste Gruppe 3 mit grossen Arbeitsstationen 3.1,3.2 und eine zweite Gruppe 4 mit kleinen Arbeitsstationen 4.1,4.2,4.3,4.4 vorgesehen ist. Die erste Gruppe 3 bedingt einen grossen Abstand von Werkstückträger 2 zu Werkstückträger 2 (grosses Rastermass), die zweite Gruppe 4 bedingt einen kleinen Abstand von Werkstückträger 2 zu Werkstückträger 2 (kleines Rastermass). Im gezeigten Ausführungsbeispiel führt die erste Gruppe 3 von Arbeitsstationen 3.1,3.2 weniger zeitintensive Arbeitsabläufe aus als die zweite Gruppe 4 von Arbeitsstationen 4.1,4.2,4.3,4.4. Die Arbeitsabläufe der ersten Gruppe 3 können auch gleich zeitintensiv oder zeitintensiver sein als die Arbeitsabläufe der zweiten Gruppe 4.

Eine erste Transfereinrichtung 5 und eine erste Verlängerung 6 bewegen die Werkstückträger 2 von Arbeitsstation zu Arbeitsstation der ersten Gruppe 3, wobei die erste Transfereinrichtung 5 die erste Verlängerung 6 mittels einer ersten Kopplung 7 mechanisch antreibt. Ein erster Transferantrieb 8 treibt die erste Transfereinrichtung 5 an.

Eine zweite Transfereinrichtung 9 und eine zweite Verlängerung 10 bewegen die Werkstückträger 2 von Arbeitsstation zu Arbeitsstation der zweiten Gruppe 4, wobei die zweite Transfereinrichtung 9 die zweite Verlängerung 10 mittels einer zweiten Kopplung 11 mechanisch antreibt. Ein zweiter Transferantrieb 12 treibt die zweite Transfereinrichtung 9 an.

Mit den Verlängerungen 6,10 wird erreicht, dass die Riementriebe der Transfereinrichtungen 5,9 wegen der Riemenelastizität nicht zu lang werden, was sich positiv auf die Positioniergenauigkeit der Werkstückträger 2 auswirkt.

Eine Übergabeeinrichtung 13 mit einem Übergabeantrieb 14 ist zwischen die beiden Transfereinrichtungen 5,9 geschaltet, wobei die erste Transfereinrichtung 5 die Werkstückträger 2 der Übergabeeinrichtung 13 übergibt und die Übergabeeinrichtung 13 die Werkstückträger 2 der zweiten Transfereinrichtung 9 zuführt. Die Übergabeeinrichtung 13 dient als Adapter für die unterschiedlichen Rastermasse der ersten Gruppe 3 und der zweiten Gruppe 4.

Falls mehr als zwei Gruppen von Arbeitsstationen vorgesehen sind, sind auch mehr als zwei Transfereinrichtungen und mehr als eine Übergabeeinrichtung vorgesehen.

Der Rücklauf der Werkstückträger 2 ist mit Pfeilen P1,P2,P3,P4 und P5 symbolisiert, wobei P1,P3,P5 beispielsweise horizontale Riementriebe sind und P2,P4 vertikale Fördereinrichtungen für die Werkstückträger 2 sind. Als Variante kann der Rücklauf der Werkstückträger 2 ausschliesslich in der horizontalen Ebene erfolgen. Diese Rücklaufvariante ist mit den Pfeilen P1,P2.1,P3.1,P4.1 und P5 symbolisiert.

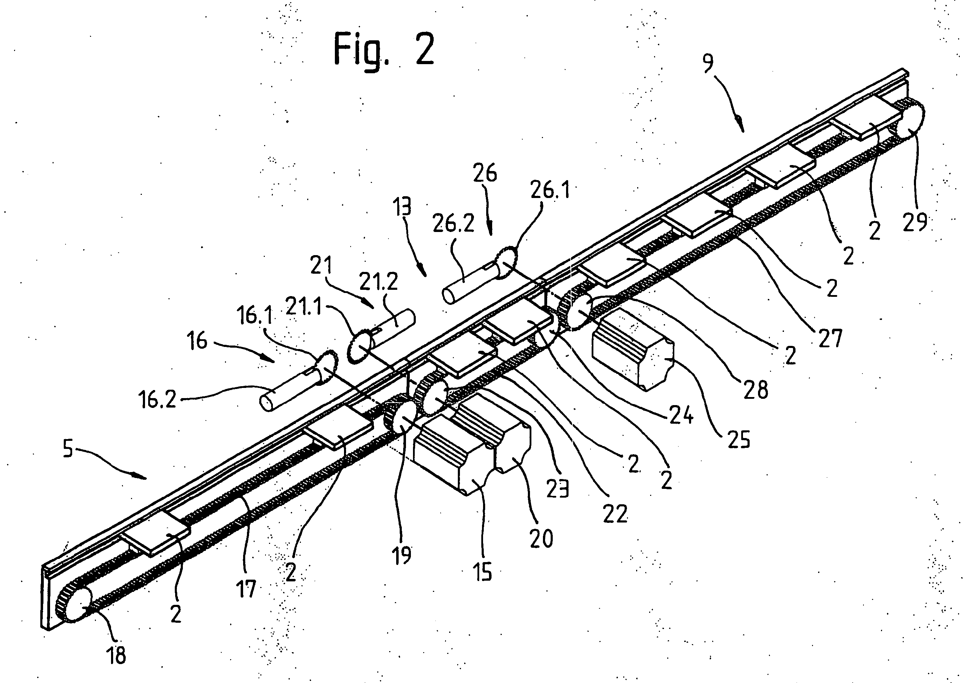

Fig. 2 zeigt die erste Transfereinrichtung 5 mit einem ersten Antriebsmotor 15, mit einem ersten Sensor 16, mit einem ersten doppelseitigen Zahnriemen 17, der mittels eines ersten Zahnrades 18 und mittels eines zweiten Zahnrades 19 umgelenkt wird, wobei der erste Antriebsmotor 15 auf das zweite Zahnrad 19 einwirkt. Der erste Sensor 16 besteht aus einer ersten Zahnscheibe 16.1, die die Zähne des zweiten Zahnrades 19 abbildet und aus einem ersten Abtaster 16.2, der die Zähne der rotierenden ersten Zahnscheibe 16.1 erfasst. Die erste Transfereinrichtung 5 transportiert zwei Werkstückträger 2.

Fig. 2 zeigt die Übergabeeinrichtung 13 mit einem zweiten Antriebsmotor 20, mit einem zweiten Sensor 21, mit einem zweiten doppelseitigen Zahnriemen 22, der mittels eines dritten Zahnrades 23 und mittels eines vierten Zahnrades 24 umgelenkt wird, wobei der zweite Antriebsmotor 20 auf das dritte Zahnrad 23 einwirkt. Der zweite Sensor 21 besteht aus einer zweiten Zahnscheibe 21.1, die die Zähne des dritten Zahnrades 23 abbildet und aus einem zweiten Abtaster 21.2, der die Zähne der rotierenden zweiten Zahnscheibe 21.1 erfasst. Die Übergabeeinrichtung 13 transportiert zwei Werkstückträger 2.

Fig. 2 zeigt die zweite Transfereinrichtung 9 mit einem dritten Antriebsmotor 25, mit einem dritten Sensor 26, mit einem dritten doppelseitigen Zahnriemen 27, der mittels eines fünften Zahnrades 28 und mittels eines sechsten Zahnrades 29 umgelenkt wird, wobei der dritte Antriebsmotor 25 auf das fünfte Zahnrad 28 einwirkt. Der dritte Sensor 26 besteht aus einer dritten Zahnscheibe 26.1, die die Zähne des fünften Zahnrades 28 abbildet und aus einem dritten Abtaster 26.2, der die Zähne der rotierenden dritten Zahnscheibe 26.1 erfasst. Die zweite Transfereinrichtung 9 transportiert vier Werkstückträger 2.

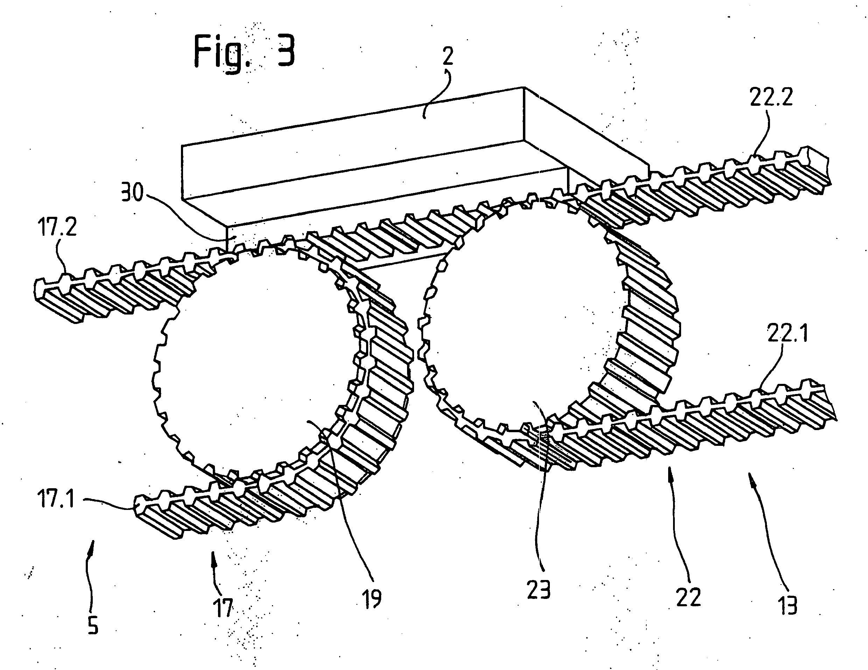

Fig. 3 zeigt eine schematische Darstellung eines Werkstückträgers 2 beim Übergang von der ersten Transfereinrichtung 5 auf die Übergabeeinrichtung 13, bzw. beim Übergang von der Übergabeeinrichtung 13 auf die zweite Transfereinrichtung 9. Der doppelseitige erste Zahnriemen 17 der ersten Transfereinrichtung 5 dient als Transportmittel für den Werkstückträger 2, wobei die Zähne 17.1 der einen Riemenseite in die Zahnräder 18,19 eingreifen und die Zähne 17.2 der anderen Riemenseite in ein and der Unterseite des Werkstückträgers 2 angeordnetes Zahnprofil 30 eingreifen. Der doppelseitige zweite Zahnriemen 22 der Übergabeeinrichtung 13 dient als Transportmittel für den Werkstückträger 2, wobei die Zähne 22.1 der einen Riemenseite in die Zahnräder 23,24 eingreifen und die Zähne 22.2 der anderen Riemenseite in das and der Unterseite des Werkstückträgers 2 angeordnete Zahnprofil 30 eingreifen. Dasselbe gilt für den Übergang des Werkstückträgers 2 von der Übergabeeinrichtung 13 auf die zweite Transfereinrichtung 5. Der Transport des Werkstückträgers 2 innerhalb der Fertigungsrichtung P0 erfolgt somit ausschliesslich mittels Formschluss zwischen Zahnriemen 17,22,27 und dem Werkstückträger 2 ohne mechanische Kopplung zwischen erster Transfereinrichtung 5 und der Übergabeeinrichtung 13 bzw. zwischen der Übergabeeinrichtung 13 und der zweiten Transfereinrichtung 9.

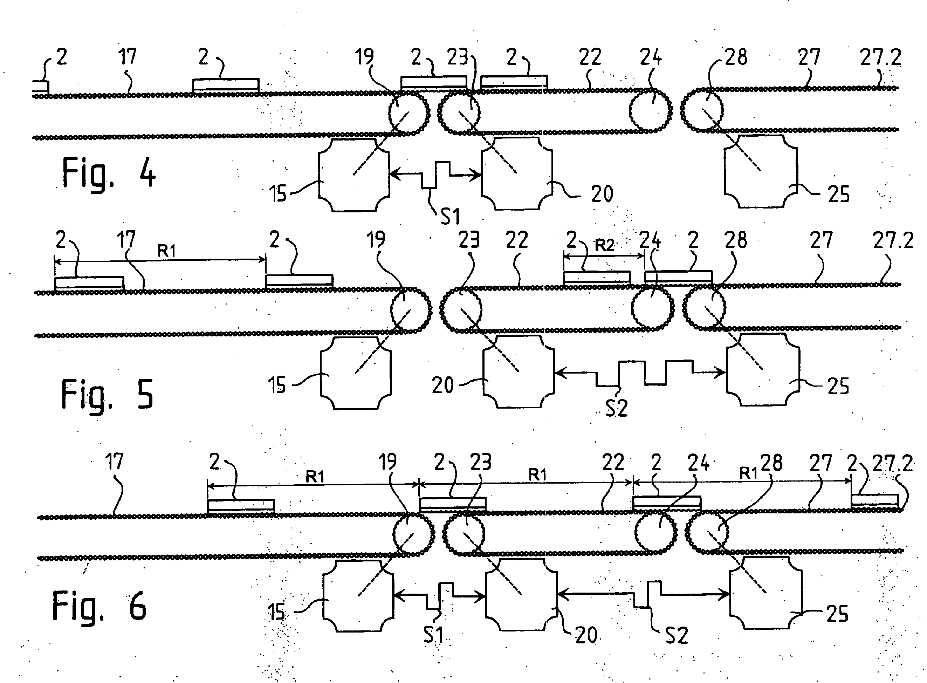

Fig. 4 zeigt eine schematische Darstellung der Synchronisation der Antriebsmotoren 15,20 beim Übergang eines Werkstückträgers 2 von der ersten Transfereinrichtung 5 auf die Übergabeeinrichtung 13. Der Werkstückträger 2 ist im Eingriff mit Zähnen 17.2 des ersten Zahnriemens 17 und mit Zähnen 22.2 des zweiten Zahnriemens 22.2. Während des Überganges des Werkstückträgers 2 von der ersten Transfereinrichtung 5 auf die Übergabeeinrichtung 13 müssen der erste Antriebsmotor 15 und der zweite Antriebsmotor 20 synchron laufen. Die Synchronisation zwischen den beiden Motoren 15,20 ist mit einem Pfeil S1 symbolisiert.

Fig. 5 zeigt eine schematische Darstellung der Synchronisation der Antriebsmotoren 20,25 beim Übergang eines Werkstückträgers 2 von der Übergabeeinrichtung 13 auf die zweite Transfereinrichtung 9. Der Werkstückträger 2 ist im Eingriff mit Zähnen 22.2 des zweiten Zahnriemens 22 und mit Zähnen 27.2 des dritten Zahnriemens 27.2. Während des Überganges des Werkstückträgers 2 von der Übergabeeinrichtung 13 auf die zweite Transfereinrichtung 9 müssen der zweite Antriebsmotor 20 und der dritte Antriebsmotor 25 synchron laufen. Die Synchronisation zwischen den beiden Motoren 20,25 ist mit einem Pfeil S2 symbolisiert. Das Rastermass R1 der ersten Transfereinrichtung 5 unterscheidet sich vom Rastermass R2 der Übergabeeinheit 13.

Fig. 6 zeigt eine schematische Darstellung der Synchronisation aller Antriebsmotoren 15,20,25 beim Übergang eines Werkstückträgers 2 von der ersten Transfereinrichtung 5 auf die Übergabeeinheit 13 und beim gleichzeitigen Übergang eines weiteren Werkstückträgers 2 von der Übergabeeinrichtung 13 auf die zweite Transfereinrichtung 9. Das Rastermass ist einheitlich und mit R1 bezeichnet.

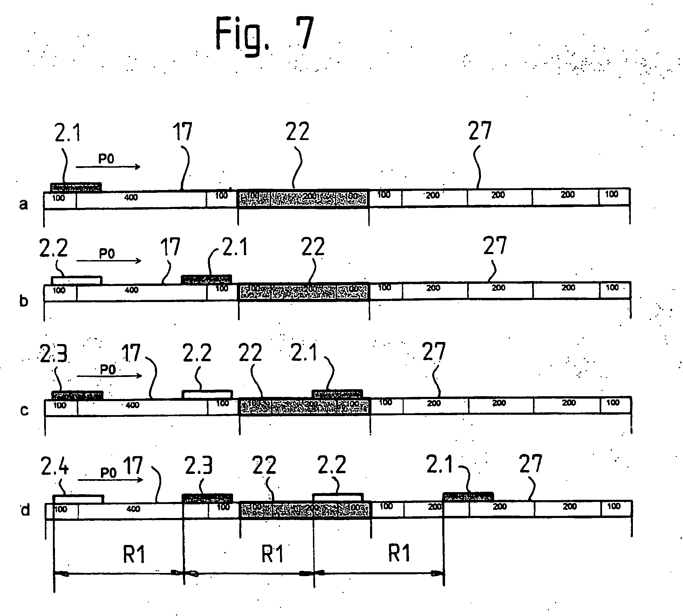

Fig. 7 zeigt eine schematische Darstellung des Transfers der Werkstückträger 2 mit gleichem Abstand innerhalb der Fertigungslinie 1. Die Distanzangaben beziehen sich beispielsweise auf mm. Der Werkstückträger 2.1 steht im Eingriff mit dem ersten Zahnriemen 17, wobei das Werkstück von der Arbeitsstation 3.1 bearbeitet wird. (Fig. 7a). Nach der Bearbeitung bewegt der erste Antriebsmotor 15 den ersten Zahnriemen 17 um 400 mm in Fertigungsrichtung P0. Der Werkstückträger 2.1 steht nun an der Position zur Bearbeitung des Werkstückes durch die Arbeitsstation 3.2. Gleichzeitig steht ein weiterer Werkstückträger 2.2 an der Position zur Bearbeitung durch die Arbeitsstation 3.1. (Fig. 7b). Im nächsten Schritt (Fig. 7c) wird der erste Zahnriemen 17 um weitere 400 mm und der zweite Zahnriemen 22 mittels des zweiten Antriebsmotors 20 um 400 mm bewegt, wobei die Zahnriemen 17,22 synchron auf die gleiche Geschwindigkeit beschleunigt werden. Dabei wird der Werkstückträger 2.1 vom zweiten Zahnriemen 22 übernommen und an der gezeigten Position angehalten. Im Schritt der Fig. 7d werden die Zahnriemen 17,22 um weitere 400 mm und der dritte Zahnriemen 27 mittels des dritten Antriebsmotors 25 um 400 mm bewegt, wobei die Zahnriemen 17,22,27 synchron auf die gleiche Geschwindigkeit beschleunigt werden. Dabei wird der Werkstückträger 2.1 vom dritten Zahnriemen 27 übernommen und an der gezeigten Position angehalten, an welcher Position die Arbeitsstation 4.2 das Werkstück des Werkstückträgers 2.1 bearbeitet. Die Positionen der weiteren Werkstückträger 2.2,2.3,2.4 sind in analoger Weise verändert worden. Die in Fig. 7 gezeigte Transferart ist vorgesehen für Arbeitsstationen der ersten Gruppe 3 und der zweiten Gruppe 4 mit gleichem Rastermass R1 und gleich zeitintensiven Arbeitsabläufen.

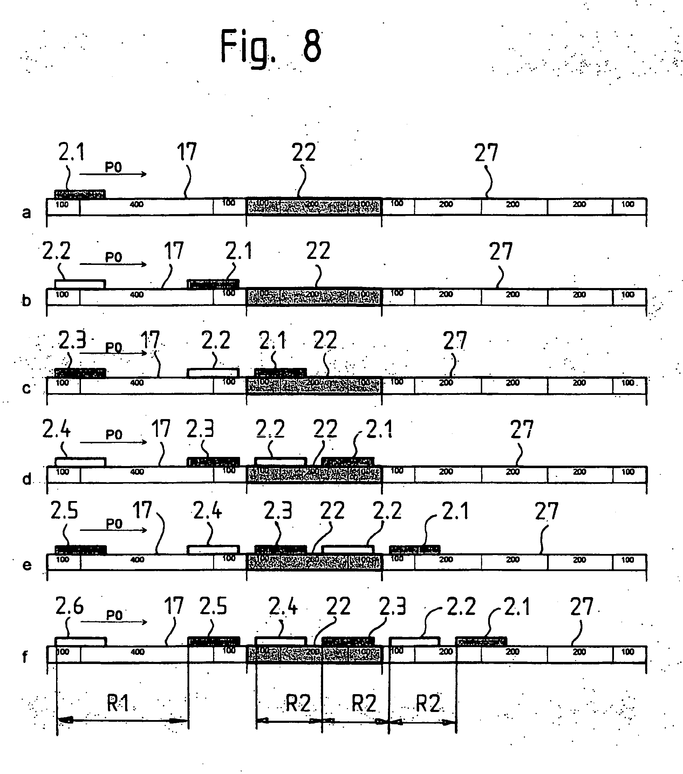

Fig. 8 zeigt eine schematische Darstellung des Transfers der Werkstückträger 2 mit unterschiedlichem Abstand innerhalb der Fertigungslinie 1. Die Distanzangaben beziehen sich beispielsweise auf mm. Der Werkstückträger 2.1 der Fig. 8a steht im Eingriff mit dem ersten Zahnriemen 17, wobei das Werkstück von der Arbeitsstation 3.1 bearbeitet wird. Nach der Bearbeitung bewegt der erste Antriebsmotor 15 den ersten Zahnriemen 17 um 400 mm in Fertigungsrichtung P0. Der Werkstückträger 2.1 steht nun an der Position zur Bearbeitung des Werkstückes durch die Arbeitsstation 3.2. Gleichzeitig steht ein weiterer Werkstückträger 2.2 an der Position zur Bearbeitung durch die Arbeitsstation 3.1. (Fig. 8b). Im nächsten Schritt (Fig. 8c) wird der erste Zahnriemen 17 um weitere 400 mm und der zweite Zahnriemen 22 mittels des zweiten Antriebsmotors 20 um 200 mm bewegt, wobei die Zahnriemen 17,22 synchron auf die gleiche Geschwindigkeit beschleunigt werden. Dabei wird der Werkstückträger 2.1 vom zweiten Zahnriemen 22 übernommen und an der gezeigten Position angehalten. Im Schritt der Fig. 8d wird der erste Zahnriemen 17 um weitere 400 mm und der zweite Zahnriemen 22 um weitere 200 mm bewegt, wobei die Zahnriemen 17,22 synchron auf die gleiche Geschwindigkeit beschleunigt werden. Auf dem zweiten Zahnriemen 22 sind nun zwei Werkstückträger 2.1,2.2 angeordnet. Im Schritt der Fig. 8e wird der erste Zahnriemen 17 um weitere 400 mm, der zweite Zahnriemen 22 um weitere 200 mm und der dritte Zahnriemen 27 mittels des dritten Antriebsmotors 25 um 200 mm bewegt, wobei die Zahnriemen 17,22,27 synchron auf die gleiche Geschwindigkeit beschleunigt werden. Dabei wird der Werkstückträger 2.1 vom dritten Zahnriemen 27 übernommen und an der gezeigten Position angehalten, an welcher Position die Arbeitsstation 4.1 das Werkstück des Werkstückträgers 2.1 bearbeitet. Im Schritt der Fig. 8f wird das Transferprozedere in analoger Weise wiederholt, wobei die Arbeitsstation 4.2 das Werkstück des Werkstückträgers 2.1 bearbeitet. Die Positionen der weiteren Werkstückträger 2.2,2.3,2.4,2.5,2.6 sind in analoger Weise verändert worden. Die in Fig. 8 gezeigte Transferart ist vorgesehen für Arbeitsstationen der ersten Gruppe 3 mit dem Rastermass R1 und für Arbeitsstationen der zweiten Gruppe 4 mit dem Rastermass R2, wobei die Arbeitsstationen der beiden Gruppen 3,4 gleich zeitintensive Arbeitsabläufe ausführen.

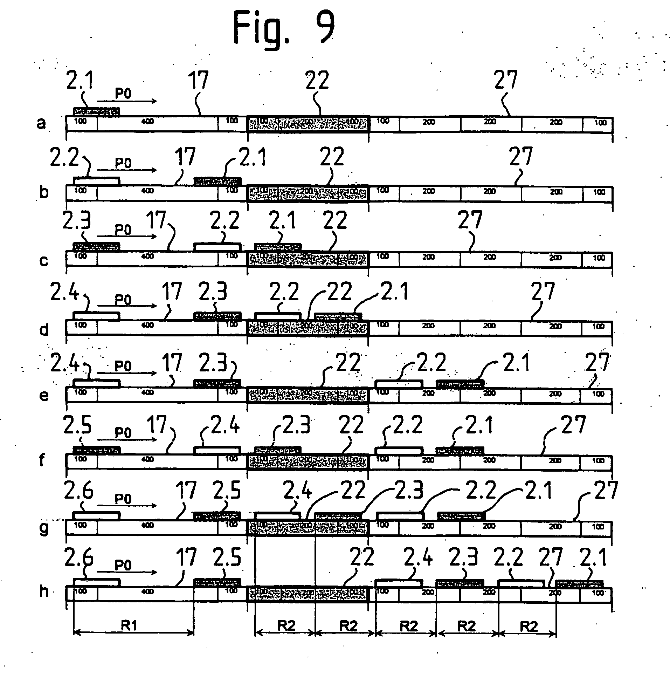

Fig. 9 zeigt eine schematische Darstellung des Transfers der Werkstückträger mit unterschiedlichem Abstand und unterschiedlich zeitintensiven Arbeitsabläufen innerhalb der Fertigungslinie. Die Schritte der Fig. 9a bis Fig. 9d sind identisch mit den Schritten der Fig. 8a bis Fig. 8d. Im Schritt der Fig. 9e bleibt der erste Zahnriemen 17 stehen, der zweite Zahnriemen 22 und der dritte Zahnriemen 27 werden um 400 mm bewegt, wobei die Zahnriemen 22,27 synchron auf die gleiche Geschwindigkeit beschleunigt werden. Dabei wird der Werkstückträger 2.1 und der Werkstückträger 2.2 vom dritten Zahnriemen 27 übernommen und an der gezeigten Position angehalten, an welcher Position die Arbeitsstation 4.2 das Werkstück des Werkstückträgers 2.1 und die Arbeitsstation 4.1 das Werkstück des Werkstückträgers 2.2 bearbeiten. Die Arbeitsabläufe sind identisch. Der Schritt der Fig. 9f ist identisch mit dem Schritt der Fig. 9c. Der Schritt der Fig. 9g ist identisch mit dem Schritt der Fig. 9d. Im Schritt der Fig. 9h wird der Schritt der Fig. 9e wiederholt, wobei der Werkstückträger 2.3 und der Werkstückträger 2.4 vom dritten Zahnriemen 27 übernommen und an der gezeigten Position angehalten werden. Mit der Bewegung des dritten Zahnriemens 27 sind die Werkstückträger 2.1,2.2 auch um 400 mm weiterbewegt worden. Die Arbeitsstation 4.2 bearbeitet das Werkstück des Werkstückträgers 2.3 und die Arbeitsstation 4.1 bearbeitet das Werkstück des Werkstückträgers 2.4. Die Arbeitsabläufe sind identisch. Die Arbeitsstation 4.3 bearbeitet das Werkstück des Werkstückträgers 2.2 und die Arbeitsstation 4.4 bearbeitet das Werkstück des Werkstückträgers 2.1. Die Arbeitsabläufe sind identisch. Die in Fig. 9 gezeigte Transferart ist vorgesehen für Arbeitsstationen der ersten Gruppe 3 mit dem Rastermass R1 und für Arbeitsstationen der zweiten Gruppe 4 mit dem Rastermass R2, wobei die Arbeitsstationen der zweiten Gruppe 4 doppelt zeitintensive Arbeitsabläufe ausführen und wobei je zwei Arbeitsstationen gleichzeitig die gleichen Arbeitsabläufe ausführen. Die Taktzeit der weniger zeitintensiven Arbeitsabläufe der ersten Gruppe 3 kann somit für die gesamte Fertigungslinie 1 beibehalten werden.

In einer weiteren Ausführungsvariante kann der dritte Antriebsmotor 25 das Rastermasss innerhalb des dritten Zahnriemens 27 bestimmen.

## Patentansprüche

1. verfahren für den Transfer von Werkstücken, die in mindestens einer ersten Gruppe von Arbeitsstationen und in mindestens einer zweiten Gruppe von Arbeitsstationen einer Fertigungslinie bearbeitet werden, wobei eine erste Transfereinrichtung (5) Werkstückträger (2) mit den Werkstücken von Arbeitsstation zu Arbeitsstation der ersten Gruppe bewegt und eine zweite Transfereinrichtung (9) werkstückträger (2) mit den Werkstücken von Arbeitsstation zu Arbeitsstation der zweiten Gruppe bewegt, wobei die erste Transfereinrichtung (5) die Werkstückträger (2) einer Übergabeeinrichtung (13) übergibt und die Übergabeeinrichtung (13) die Werkstückträger (2) der zweiten Transfereinrichtung (9) zuführt,
**dadurch gekennzeichnet,**
**dass** die Transfereinrichtungen (5,9) und die Übergabeeinrichtung (13) mechanisch unabhängig voneinander und ohne mechanische Kopplung zwischen erster Transfereinrichtung (5) und der Übergabeeinrichtung (13) bzw. zwischen der Übergabeeinrichtung (13) und der zweiten Transfereinrichtung (9) arbeiten, wobei der Transport des werkstückträgers (2) ausschliesslich mittels Formschluss zwischen erster Transfereinrichtung (5) und Werkstückträger (2) zwischen Übergabeeinrichtung (13) und Werkstückträger (2) sowie zwischen zweiter Transfereinrichtung (9) und Werkstückträger (2) erfolgt.

2. Verfahren nach Anspruch 1,
**dadurch gekennzeichnet,**
**dass** beim Übergang eines Werkstückträgers (2) die Transfereinrichtungen (5,9) und die Übergabeeinrichtung (13) elektrisch synchronisiert werden.

3. Verfahren nach den Ansprüchen 1 oder 2,
**dadurch gekennzeichnet,**
**dass** die Übergabeeinrichtung (13) als Adapter für unterschiedliche Rastermasse (R1,R2) der ersten Gruppe (3) und der zweiten Gruppe (4) dient.

4. Einrichtung für den Transfer von Werkstücken mittels Werstückträgern (2) innerhalb einer Fertigungslinie mit mindestens einer ersten Gruppe von Arbeitsstationen und mit mindestens einer zweiten Gruppe von Arbeitsstationen, wobei die Werkstückträger (2) innerhalb der ersten Gruppe mittels einer ersten Transfereinrichtung (5) und innerhalb der zweiten Gruppe mittels einer zweiten Transfereinrichtung (9) bewegbar sind und zwischen den Transfereinrichtungen (5,9) eine Übergabeeinrichtung (13) vorgesehen ist, die Werkstückträger (2) von der ersten Transfereinrichtung (5) übernimmt und die Werkstückträger (2) der zweiten Transfereinrichtung (9) zuführt,
**dadurch gekennzeichnet,**
**dass** die Transfereinrichtungen (5,9) und die Übergabeeinrichtung (13) mechanisch unabhängig voneinander und ohne mechanische Kopplung untereinander arbeitende Riemen (17,22,27) aufweisen, wobei der Transport des Werkstückträgers (2) ausschliesslich mittels Formschluss zwischen den Riemen (17,22,27) und dem Werkstückträger (2) erfolgt.

5. Einrichtung nach Anspruch 4,
**dadurch gekennzeichnet,**
**dass** doppelseitige Zahnriemen (17,22,27) vorgesehen sind, in die die Werkstückträger (2) mittels Zahnprofil (30) eingreifen, wobei beim Übergang eines Werkstückträgers (2) von einer Einrichtung auf eine andere Einrichtung das Zahnprofil (30) gleichzeitig in zwei Riemen (17,22,27) eingreift.

6. Einrichtung nach den Ansprüchen 4 oder 5,
**dadurch gekennzeichnet,**
**dass** beim Übergang eines Werkstückträgers (2) die Zahnriemen (17,22,27) der Transfereinrichtungen (5,9) und der Übergabeeinrichtung (13) mittels Antriebsmotoren (15,20,25) sychronisierbar sind.

## Claims

1. Method for the transfer of workpieces which are processed in at least one first group of work stations and in at least one second group of work stations of a production line, wherein a first transfer device (5) moves workpiece carriers (2) with the workpieces from work station to work station of the first group and a second transfer device (9) moves workpiece carriers (2) with the workpieces from work station to work station of the second group and wherein the first transfer device (5) hands over the workpiece carriers (2) to an interchange device (13) and the interchange device (13) feeds the workpiece carriers (2) to the second transfer device (9), **characterised in that** the transfer devices (5, 9) and the interchange device (13) operate mechanically independently of one another and without mechanical coupling between first transfer device (5) and interchange device (13) or between the interchange device (13) and the second transfer device (9), wherein the transport of the workpiece carrier (2) takes place exclusively by means of mechanically positive couple between first transfer device (5) and workpiece carrier (2), between interchange device (13) and workpiece carrier (2) and between second transfer device (9) and workpiece carrier (2).

2. Method according to claim 1, **characterised in that** the transfer devices (5, 9) and the interchange device (13) are electrically synchronised during handover of a workpiece carrier (2).

3. Method according to claim 1 or 2, **characterised in that** the interchange device (13) serves as an adapter for different pitch dimensions (R1, R2) of the first group (3) and the second group (4).

4. Equipment for the transfer of workpieces by means of workpiece carriers (2) within a production line with at least one first group of work stations and with at least one second group of work stations, wherein the workpiece carriers (2)are movable within the first group by means of a first transfer device (5) and within the second group by means of a second transfer device (9) and an interchange device (13), which takes over the workpiece carriers (2) from the first transfer device (5) and feeds the workpiece carriers (2) to the second transfer device (9), is provided between the transfer devices, **characterised in that** the transfer devices (5, 9) and the interchange device (13) comprise belts (17, 22, 27) which operate mechanically independently of one another and without mechanical coupling with one another, wherein the transport of the workpiece carrier (2) takes place exclusively by means of mechanically positive couple between the belts (17, 22, 27) and the workpiece carrier (2).

5. Equipment according to claim 4, **characterised in that** double-sided cogged belts (17, 22, 27) are provided, in which the workpiece carriers (2) engage by means of a toothed profile (30), wherein the toothed profile (30) simultaneously engages in two belts (17, 22, 27) during handover of a workpiece carrier (2) from one device to another device.

6. Equipment according to claim 4 or 5, **characterised in that** the cogged belts (17, 22, 27) of the transfer devices (5, 9) and the interchange device (13) can be synchronised by means of drive motors (15, 20, 25) during handover of a workpiece carrier.

## Revendications

1. Procédé pour le transfert de pièces qui sont traitées dans au moins un premier groupe de postes de travail et dans au moins un second groupe de postes de travail d'une chaîne de fabrication, un premier dispositif de transfert (5) déplaçant des porte-pièces (2) avec les pièces d'un poste de travail à l'autre dans le premier groupe tandis qu'un second dispositif de transfert (9) déplace des porte-pièces (2) avec les pièces d'un poste de travail à l'autre dans le second groupe, et le premier dispositif de transfert (5) transférant les porte-pièces (2) sur un dispositif de transbordement (13) et celui-ci amenant les porte-pièces (2) sur le second dispositif de transfert (9),
**caractérisé en ce que** les dispositifs de transfert (5, 9) et le dispositif de transbordement (13) fonctionnent en étant indépendants mécaniquement et sans accouplement mécanique entre le premier dispositif de transfert (5) et le dispositif de transbordement (13) ni entre le dispositif de transbordement (13) et le second dispositif de transfert (9), le transport du porte-pièce (2) se faisant uniquement par complémentarité de forme entre le premier dispositif de transfert (5) et le porte-pièce (2), entre le dispositif de transbordement (13) et le porte-pièce (2) et entre le second dispositif de transfert (9) et le porte-pièce (2).

2. Procédé selon la revendication 1, **caractérisé en ce que** lors du passage d'un porte-pièce (2), les dispositifs de transfert (5, 9) et le dispositif de transbordement (13) sont synchronisés électriquement.

3. Procédé selon les revendications 1 ou 2, **caractérisé en ce que** le dispositif de transbordement (13) sert d'adaptateur pour différents écartements (R1, R2) dans le premier groupe (3) et dans le second groupe (4).

4. Dispositif pour le transfert de pièces à l'aide de porte-pièces (2) à l'intérieur d'une chaîne de fabrication avec au moins un premier groupe de postes de travail et au moins un second groupe de postes de travail, étant précisé que les porte-pièces (2) sont aptes à être déplacés à l'intérieur du premier groupe grâce à un premier dispositif de transfert (5) et à l'intérieur du second groupe grâce à un second dispositif de transfert (9), et qu'il est prévu entre les dispositifs de transfert (5, 9) un dispositif de transbordement (13) qui prend les porte-pièces (2) sur le premier dispositif de transfert (5) et les amène sur le second dispositif de transfert (9),
**caractérisé en ce que** les dispositifs de transfert (5, 9) et le dispositif de transbordement (13) comportent des courroies (17, 22, 27) qui fonctionnent en étant indépendantes mécaniquement et sans être accouplées mécaniquement, le transport du porte-pièce (2) se faisant uniquement par complémentarité de forme entre les courroies (17, 22, 27) et le porte-pièce (2).

5. Dispositif selon la revendication 4, **caractérisé en ce qu'**il est prévu des courroies dentées à deux côtés (17, 22, 27) dans lesquelles les porte-pièces (2) s'engrènent grâce à un profil denté (30), étant précisé que lorsque le porte-pièce (2) passe d'un dispositif à l'autre, le profil denté (30) s'engrène dans deux courroies (17, 22, 27) en même temps.

6. Dispositif selon les revendications 4 ou 5, **caractérisé en ce que** lors du passage d'un porte-pièce (2), les courroies dentées (17, 22, 27) des dispositifs de transfert (5, 9) et du dispositif de transbordement (13) sont aptes à être synchronisées grâce à des moteurs d'entraînement (15, 20, 25).
